# EUROPÄISCHE PATENTSCHRIFT

(11) **EP 2 684 198 B1**
(45) Veröffentlichungstag und Bekanntmachung des Hinweises auf die Patenterteilung: **24.12.2014**
(21) Anmeldenummer: 12712218.2
(22) Anmeldetag: 06.03.2012
(51) Int. Cl.: H01F 6/00, F17C 13/00, F25J 1/00

(54) **VORRICHTUNG ZUR SPEICHERUNG VON WASSERSTOFF UND VON MAGNETISCHER ENERGIE SOWIE EIN VERFAHREN ZU IHREM BETRIEB**
APPARATUS FOR STORING HYDROGEN AND MAGNETIC ENERGY AND A METHOD FOR THE OPERATION OF SAID APPARATUS
DISPOSITIF DE STOCKAGE D'HYDROGÈNE ET D'ÉNERGIE MAGNÉTIQUE, ET PROCÉDÉ POUR FAIRE FONCTIONNER LEDIT DISPOSITIF

(30) Priorität: 10.03.2011 DE 102011013577
(43) Veröffentlichungstag der Anmeldung: 15.01.2014
(73) Patentinhaber: Karlsruher Institut Für Technologie (KIT), 76131 Karlsruhe (DE)
(72) Erfinder: NEUMANN, Holger, 76356 Weingarten (DE); SANDER, Michael, 76344 Eggenstein-Leopoldshafen (DE)
(86) Internationale Anmeldenummer: PCT/EP2012/000985
(87) Internationale Veröffentlichungsnummer: WO 2012/119757

(56) Entgegenhaltungen:
- DE-A1- 4 128 362
- DE-A1-102007 042 711
- US-A1- 2002 040 583
- HIROMI HIRABAYASHI ET AL: "Liquid Hydrogen Cooled Superconducting Magnet and Energy Storage", IEEE TRANSACTIONS ON APPLIED SUPERCONDUCTIVITY, IEEE SERVICE CENTER, LOS ALAMITOS, CA, US, Bd. 17, Nr. 2, 1. Juni 2008 (2008-06-01), Seiten 766-769, XP011214430, ISSN: 1051-8223
- H. HIRABAYASHI ET AL: "Feasibility of Hydrogen Cooled Superconducting Magnets", IEEE TRANSACTIONS ON APPILED SUPERCONDUCTIVITY, Bd. 16, Nr. 2, 1. Juni 2006 (2006-06-01), Seiten 1435-1438, XP55031009, ISSN: 1051-8223, DOI: 10.1109/TASC.2005.869556

## Beschreibung

Die Erfindung betrifft eine Vorrichtung zur Speicherung von Wasserstoff mit einer Einleitung für komprimierten Wasserstoff sowie mit einer Ausleitung für Wasserstoff bei niedrigerem Druck dafür und zur Speicherung von magnetischer Energie.

Die Ausweitung des Anteils an fluktuierenden regenerativen Energiequellen an der elektrischen Energieversorgung erfordert zusätzliche Maßnahmen zum Ausgleich von Einspeiseschwankungen. Verflüssigter Wasserstoff, der eine hohe volumetrische Energiedichte aufweist, eignet sich hierfür als Energiespeicher und Treibstoff. Gegenüber der Komprimierung von Wasserstoff ist jedoch zur Verflüssigung von Wasserstoff eine höhere elektrischen Energie erforderlich, die typischerweise ca. 30% des oberen Heizwerts von Wasserstoff beträgt, verglichen mit ca. 10% für die Komprimierung auf ca. 15 MPa bis 20 MPa.

Nach H. Quack, *Die Schlüsselrolle der Kryotechnik in der Wasserstoff-Energiewirtschaft,* TU Dresden, http://images.energie-porta124.de/dateien/downloads/verfluessigung-dresden.pdf arbeiten großtechnische Wasserstoff-Verflüssiger üblicherweise mit mehreren kontinuierlichen Gasströmen, Wärmeübertragern (Rekuperatoren), die gleichzeitig im Gegenstrom durchströmt werden, mehreren Gasrückführungen, Expansionsmaschinen zur Kälteerzeugung bei intermediären Temperaturen und separaten Schleifen für die beim Wasserstoff erforderliche Ortho-Para-Umwandlung. Der schließlich in einem Entspannungsventil verflüssigte Wasserstoff kann dann entnommen und an seinen Einsatzort transportiert werden. Ein Großteil der elektrischen Energie, die für die Verflüssigung erforderlich ist, verbleibt bei der Aufwärmung am Einsatzort ungenutzt.

Verfahren, in denen ein Regenerator abwechselnd von der kalten und der warmen Seite mit einem Gas durchströmt wird, sind von Kleinkühlern bekannt, siehe R. Radebaugh, Cryocoolers: the state of the art and recent developments, J. Phys.: Condens. Matter 21 (2009) 164219. Beim Stirling-Prozess kommt ein stationärer Regenerator und im kalten Teil ein mechanisch bewegter Entspannungskolben zum Einsatz. Beim Gifford-McMahon-Prozess wird ein mechanisch bewegter Regenerator als Verdränger eingesetzt. Bei Pulsrohr-Kühlern werden ebenfalls Kreisprozesse durchlaufen, allerdings ist hier der mechanische Kolben oder Verdränger durch eine pulsierende Gassäule ersetzt. Diesen Verfahren ist gemeinsam, dass sie auf Baugrößen maximal bis in den kW-Bereich beschränkt sind, bei Betriebsfrequenzen von 50 Hz bis zu 1 Hz arbeiten und sie primär zur Kälteerzeugung, nicht aber zur Gasverflüssigung eingesetzt werden.

Im Falle von Wasserstoff ist es erforderlich, die beiden Spin-Zustände des Wasserstoffmoleküls zu berücksichtigen, die sich energetisch durch eine Umwandlungswärme in Höhe von ca. dem 1,5-fachen der Verflüssigungs-Enthalpie unterscheiden. In der Praxis muss sich daher der Wasserstoff in jedem Verfahrensschritt, der mit Abkühlung, Speicherung und Wiederaufwärmung zusammenhängt, möglichst nahe am Ortho-Para-Gleichgewicht befinden. Um diese Bedingung zu erfüllen, werden nach R. Gross, W. Otto, A. Patzelt, M. Wanner, Flüssigwasserstoff für Europa - die Linde Anlage in Ingolstadt, Linde-Berichte aus Technik und Wissenschaft 71/1994, S. 36-42, üblicherweise Katalysatoren für die Ortho-Para-Umwandlung während des Abkühlvorganges eingesetzt. Hierzu sind jedoch Gasrückführungen und die Bereitstellung von zusätzlicher Kälteleistung bei intermediären Temperaturen erforderlich.

Aus der DE 10 2007 042 711 A1 ist die Kombination von verflüssigtem Wasserstoff als Energiespeicher für längere Speicherzeiten und einem supraleitenden magnetischen Energiespeicher (SMES) bekannt, der dort zur Kurzzeitspeicherung eingesetzt wird.

Die DE 38 43 065 A1 offenbart den Einsatz einer Magnetspule für eine magnetokalorische Verflüssigungsstufe. Das Magnetfeld dient hier dazu, um para- oder ferromagnetische Materialien in einem Kreisprozess sukzessive auf- und abzumagnetisieren, wobei der magnetokalorische Effekt Kälte erzeugt, die sich zur Verflüssigung von Gasen wie Wasserstoff einsetzen lässt.

Die DE 196 00 936 A1 offenbart eine Membranbrennstoffzelle, umgeben von einem HTSL-Spule/Hohlzylinder-Speicher sowie einem Halbleiter-HTSL-Photovoltaik-Zylinder. Gasförmiger Wasserstoff und Sauerstoff strömen, getrennt durch Katalysator und Membran, von beiden Seiten in einen porösen Verteiler ein. Bei der Wasserstoff-/Sauerstoff-Reaktion entsteht ein elektrischer Strom in einem Stromkollektor, dessen Spannung an Polen abgegriffen wird, sowie Wasser, das am Ausgang entweicht. Die die Membran-Brennstoffzelle umgebende HTSL-Spule und der HTSL-Hohlzylinder werden mit Flüssigwasserstoff gekühlt und dienen als zusätzliche Sekunden-/Minuten-Speicher. Der p/n-dotierte Halbleiter-HTSL-Photovoltaik-Zylinder erzeugt zusätzlichen Solarstrom; der durch Sonneneinstrahlung verdampfende Wasserstoff wird mittels Wärmetauscher und magnetokalorischer HTSL-Regeneratorstufen verflüssigt wieder in das HTSL-Kühlsystem oder in gasförmigem Zustand in die Brennstoffzelle zurückgeführt. Der umgekehrte Vorgang der Brennstoffzellen-Reaktion, die Elektrolyse, erzeugt mit derselben Membran-Anordnung wieder aus Wasser Wasserstoff, der als Kühlmedium HTSL-magnetokalorisch verflüssigt wird. Ein Teil der elektrischen Energie für die Elektrolyse kann vom p/n-Halbleiter-HTSL-Photovoltaik-Zylinder erzeugt werden.

Aus der DE 101 06 483 A1 ist die Vermeidung von Kälteleistung durch Umgehung zumindest eines Katalysators zur Ortho-Para-Umwandlung beim Verflüssigungsprozess bekannt. Dieses Verfahren ist dort vorteilhaft, wo nur kurze Speicherzeiten für den verflüssigten Wasserstoff erforderlich sind, insbesondere wenn dieser unmittelbar nach seiner Erzeugung in einem wasserstoffbetriebenen Fahrzeug verbraucht wird.

Ausgehend hiervon ist es die Aufgabe der vorliegenden Erfindung, eine zuverlässige und aus möglichst wenigen Komponenten bestehende Vorrichtung zur zwischenzeitlichen Speicherung von Wasserstoff und magnetischer Energie sowie ein Verfahren zu ihrem Betrieb bereitzustellen, die die Nachteile und Einschränkungen des Stands der Technik überwinden.

Insbesondere soll eine Vorrichtung bereitgestellt werden, die den bisher bestehenden Wirkungsgradvorteil von komprimiertem Wasserstoff ausgleicht und zusammen mit der Zusatz-Funktion der elektrischen Energiespeicherung im supraleitenden magnetischen Energiespeicher (SMES) eine energetisch vorteilhafte Art der Speicherung von Wasserstoff in verflüssigter Form vorsieht.

Diese Aufgabe wird im Hinblick auf die Vorrichtung durch die Merkmale des Anspruchs 1 und im Hinblick auf das Verfahren zu ihrem Betrieb durch die Verfahrensschritte des Anspruchs 5 gelöst. Die Unteransprüche beschreiben jeweils vorteilhafte Ausgestaltungen der Erfindung.

Eine erfindungsgemäße Vorrichtung weist insbesondere
- einen supraleitenden Magnetspeicher (SMES), der aus mindestens einer Magnetspule aufgebaut ist, dem daher bei Betriebstemperatur elektrische Energie in Form eines Magnetfeldes zugeführt und wieder entnommen werden kann und der durch ein flüssiges Kühlmittel gekühlt wird, auf sowie die folgenden Komponenten, die sich sämtlich im Feldbereich des Magnetfelds der mindestens einen Magnetspule befinden :
- einen Speichertank für verflüssigten (flüssigen) Wasserstoff (**LH2**),
- mindestens einen Regenerator (thermischer Massenspeicher), worin der Wasserstoff bei Zuführung gekühlt und bei Abnahme erwärmt wird, und
- ein Entspannungsventil, insbesondere ein Joule-Thomson-Entspannungsventil, zur Verflüssigung des komprimierten und im mindestens einen Regenerator vorgekühlten Wasserstoffs und zur anschließenden Zuführung in den Speichertank für flüssigen Wasserstoff (**LH2**),
wobei - bedingt durch das Magnetfeld der mindestens einen Magnetspule - im mindestens einen Regenerator die Ortho-Para-Umwandlung bzw. die Para-Ortho-Rückumwandlung des Wasserstoffs unterstützt wird.

Die erfindungsgemäße Vorrichtung basiert einerseits auf dem Einsatz von Regeneratoren, also thermischen Massenspeichern, anstelle von Rekuperatoren, d.h. Gegenstrom-Wärmeübertragern, und das Magnetfeld der mindestens einen Magnetspule des supraleitenden Magnetspeichers (SMES) erlaubt andererseits den vollständigen Verzicht auf Katalysatoren sowohl für die Ortho-Para-Umwandlung als auch für die Para-Ortho-Rückumwandlung. Abgesehen von einfachen Absperrventilen, wird so auf bewegte Massen im kalten Bereich und auf Gasrückführungen verzichtet.

Der mindestens eine Regenerator, der sich in einer vorteilhaften Ausgestaltung zumindest teilweise in einer Kammer unter Vakuumbedingungen befindet, ist aus einem oder mehreren Wärme aufnehmenden und abgebenden Speichermedien aufgebaut. Da der Regenerator in einem sich verändernden starken Magnetfeld betrieben wird und daraus erzeugte Wärmeeinträge und Kühlverluste gering gehalten werden sollen, sind weitgehend unmagnetische und elektrisch isolierende Speichermedien mit gleichzeitig hoher Wärmekapazität besonders geeignet.

Typischerweise wird der mindestens eine Regenerator zwischen Umgebungstemperatur und einer Temperatur betrieben, die höchstens 35 K beträgt. Eine anschließende Entspannung des auf ausreichend hohen Druck komprimierten Wasserstoffs auf einen Druck von ca. 0,1 MPa ermöglicht damit bereits eine weitgehende Verflüssigung. Eine direkte Verflüssigung bei ca. 0,1 MPa würde demgegenüber erfordern, dass die gesamte Verflüssigungs-Enthalpie (Verdampfungswärme) genau beim Siedepunkt dem Wasserstoff entzogen werden müsste, was nicht nur schwer realisierbar, sondern auch sehr ineffizient sein würde. Daher ist es vorteilhaft, den Wasserstoff zunächst bei Umgebungstemperatur auf überkritische Drücke zu komprimieren und dann über ein Entspannungsventil zu verflüssigen.

Die Verflüssigungs- und Abkühlungs-Enthalpie des Wasserstoffs wird nach der Phase der Speicherung beim Aufwärmen dem mindestens einen Regenerator) entzogen, der später beim erneuten Abkühlen dem komprimierten Wasserstoff über einen weiten Temperaturbereich diese Enthalpien entziehen kann.

In einer besonderen Ausgestaltung ist der mindestens eine Regenerator räumlich so angeordnet, dass er sich oberhalb des Speichertanks für verflüssigten Wasserstoff befindet, wobei jeweils das kalte Ende des mindestens einen Regenerators der Flüssigkeitsoberfläche des Bads aus verflüssigtem Wasserstoff (**LH2**-Bad) zugewandt ist und auf diese Weise eine Abgabe des verflüssigten Wasserstoffs in den Speichertank erleichtert.

Um den mindestens einen Regenerator an seinem kalten Ende thermisch zu stabilisieren, ist in einer bevorzugten Ausgestaltung ein thermischer Kontakt zwischen dem **LH2**-Bad und dem kalten Ende des mindestens einen Regenerators vorgesehen, über den sich zudem ein Teil des mindestens einen Regenerators auch mechanisch gehalten werden kann.

Um insbesondere den Wärmeeintrag in den Speichertank für verflüssigten Wasserstoff (**LH2**) zu reduzieren, wird dieser in einer besonders bevorzugten Ausgestaltung weitgehend mit einem mit flüssigem Stickstoff (**LN2**) gekühlten sog. *Strahlungsschild* umgeben. Gleichzeitig dient dieses Bad aus flüssigem Stickstoff (**LN2**-Bad) auch zur besseren thermischen Stabilisierung des mindestens einen Regenerators bei wechselnden Betriebszuständen, wobei sich dieser thermische Kontakt zum **LN2**-Bad weiterhin auch zur mechanischen Halterung zumindest von Teilen des mindestens einen Regenerators einsetzen lässt. Anstelle von flüssigem Stickstoff **LN2** wird in einer alternativen Ausgestaltung flüssiger Sauerstoff **LO2** eingesetzt.

Ein erfindungsgemäßes Verfahren weist die Schritte a) bis d) auf.

Gemäß Schritt a) wird der Betriebsstrom für einen supraleitenden magnetischen Energiespeicher (SMES), der aus mindestens einer Magnetspule aufgebaut ist, über Stromzuführungen eingestellt, wodurch der damit verbundenen Magnetspule elektrische Energie zugeführt, in ihr gespeichert oder aus ihr entnommen wird. Bereits mit diesem Schritt kann kurzzeitig Energie bereitgestellt werden.

Zur längerfristigen Bereitstellung von Energie kommt darüber hinaus der gespeicherte Wasserstoff zur Anwendung, der vorzugsweise in einem Elektrolyseur erzeugt und in einer Brennstoffzelle wieder in elektrischen Strom umgewandelt wird.

Wesentlich für das erfindungsgemäße Betriebsverfahren ist, dass die Magnetfeldstärke an allen Orten des mindestens einen Regenerators, des (Joule-Thomson-)Entspannungsventils und des Speichertanks für den verflüssigten Wasserstoff eine festgelegte untere Grenze nicht unterschreitet. Nur damit ist sichergestellt, dass mittels des Magnetfeldes die Ortho-Para-Umwandlung bzw. die Para-Ortho-Rück-Umwandlung des Wasserstoffs so unterstützt werden, dass sich bei jeder Temperatur ein weitgehend thermisches Gleichgewicht zwischen den beiden Spin-Zuständen einstellt.

Gemäß Schritt b) wird komprimierter Wasserstoff bei Umgebungstemperatur über das warme Ende des mindestens einen Regenerators zugeführt, im mindestens einen Regenerator durch Wärmeabgabe an das mindestens eine, sich darin befindliche Speichermedium abgekühlt, dann im (Joule-Thomson-)Entspannungsventil auf einen niedrigeren Druck entspannt und dabei überwiegend verflüssigt, und schließlich gemäß Schritt c) als verflüssigter Wasserstoff als **LH2**-Bad im Speichertank aufgefangen und gelagert.

Gemäß Schritt d) wird bei Bedarf der verflüssigte Wasserstoff (**LH2**) dem **LH2**-Bad im Speichertank entnommen und dem kalten Ende des mindestens einen Regenerators zugeführt, darin durch Wärmeaufnahme aus dem mindestens einen Speichermedium aufgewärmt und über das warme Ende des mindestens einen Regenerators als gasförmiger Wasserstoff (**GH2**) ausgeleitet.

Um einen zuverlässigen Betrieb sicherzustellen, wird der mindestens eine Regenerator zusätzlich durch Kontakt zu Kältebädern thermisch stabilisiert:

In einer ersten Ausgestaltung wird hierzu das kalte Ende des mindestens einen Regenerators auf das Temperaturniveau des **LH2**-Bades stabilisiert.

In einer anderen Ausgestaltung wird hierzu zumindest ein Teil des mindestens einen Regenerators auf das Temperaturniveau eines **LN2**- oder **LO2**-Bades stabilisiert.

Soll Sauerstoff zur thermischen Stabilisierung des mindestens einen Regenerators eingesetzt werden, wird dieser zusammen mit Wasserstoff in einem Hochdruck-Elektrolyseur erzeugt, dann zunächst durch Wärmeübertragung ebenfalls abgekühlt, druckentpannt und dabei weiter abgekühlt und/oder teilverflüssigt. Der Einsatz eines Hochdruck-Elektrolyseurs verringert die ansonsten für die Kompression erforderliche elektrische Energie.

Die vorgeschlagene Kombination aus Flüssig-Wasserstoff und supraleitendem Magnetspeicher (SMES) stellt Regelleistungen für das elektrische Netz auf Zeitskalen von Sekunden bis Stunden und Tagen bereit und trägt so zur Pufferung der steigenden Stromanteile von fluktuierender Wind- und Sonnenkraft bei. Insbesondere verstärkt dieser Ansatz den Anreiz, verflüssigten Wasserstoff anstelle von komprimiertem Wasserstoff einzusetzen.

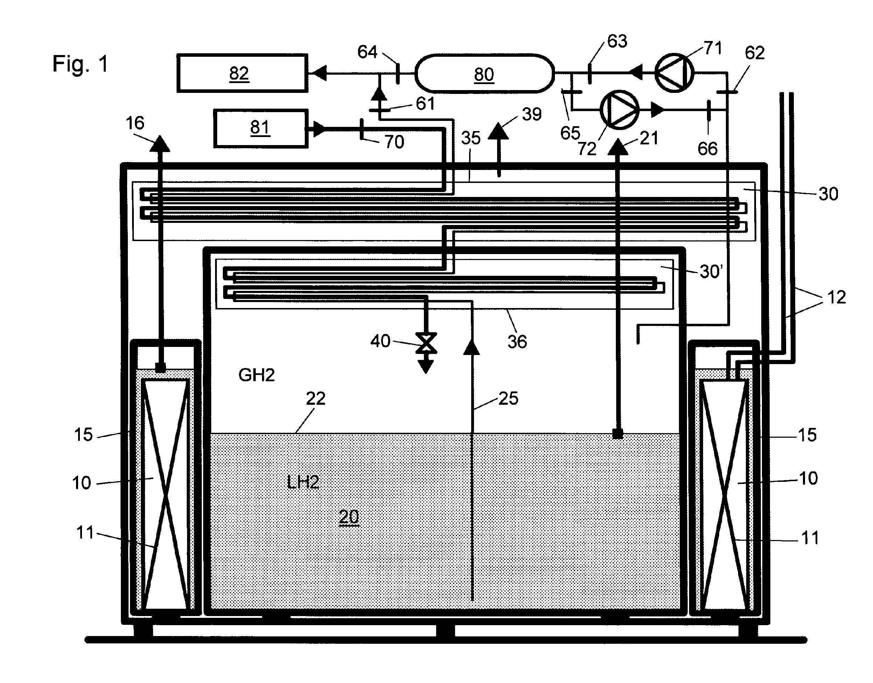

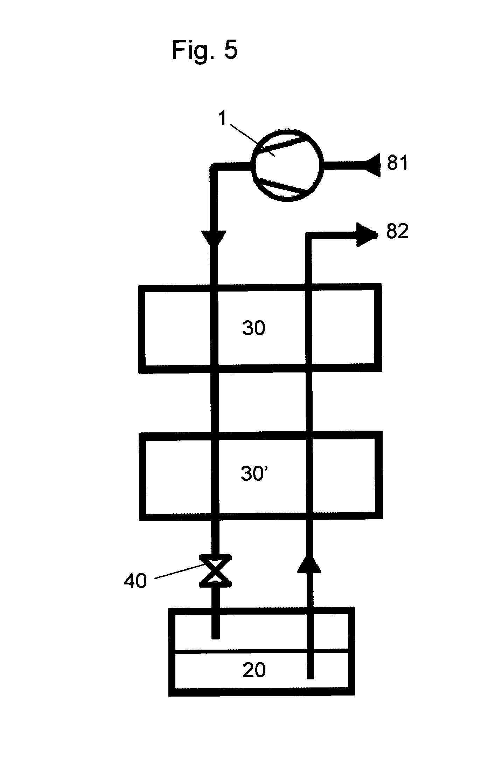

Die Erfindung wird im Folgenden anhand von Ausführungsbeispielen und den Figuren näher erläutert. Hierbei enthalten die **Fig. 1 bis 4** Ausführungsbeispiele für eine erfindungemäße Vorrichtung, während in den **Fig. 5 bis 10** ein erfindungsgemäßes Verfahren zu ihrem Betrieb dargestellt ist. Bezüglich der Abkürzungen wird auf die **Bezugszeichenliste** verwiesen.

Die Figuren zeigen im Einzelnen:
- **Fig. 1**: Schematische Darstellung einer erfindungemäßen Vorrichtung mit einem Regenerator mit separaten Strömungskanälen, von dem sich zumindest ein Teil im Speichertank unter **GH2**-Bedingungen befindet;
- **Fig. 2**: Schematische Darstellung einer Vorrichtung mit einem Regenerator mit **LN2**- und **LH2**-Stabilisierung und separaten Strömungskanälen sowie einem im **LH2**-Bad betriebenen supraleitenden magnetischen Energiespeicher (SMES);
- **Fig. 3**: Schematische Darstellung einer Vorrichtung mit einem Regenerator mit **LN2**- und **LH2**-Stabilisierung, gemeinsamen Strömungskanälen und Ventilen im kalten Bereich sowie einem im **LH2**-Bad betriebenen **SMES;**
- **Fig. 4**: Schematische Darstellung einer Vorrichtung mit einem Regenerator mit **LN2**- und **LH2**-Stabilisierung und separaten Strömungskanälen sowie einem im **LHe**-Bad betriebenen SMES;
- **Fig. 5**: Flussdiagramm mit dem Ablauf eines ersten erfindungsgemäßen Verfahrens zur Speicherung von Wasserstoff;
- **Fig. 6**: Beispiel für den Druckverlauf während des erfindungsgemäßen Abkühl- und des Aufwärmvorgangs;
- **Fig. 7**: Beispiel für den Verlauf der Enthalpie während des erfindungsgemäßen Abkühl- und des Aufwärmvorgangs;;
- **Fig. 8**: Beispiel für den Dichteverlauf während des erfindungsgemäßen Abkühl- und des Aufwärmvorgangs;
- **Fig. 9**: Beispiel für die erfindungsgemäß aufzuwendende elektrische Energie zur Kompression des **GH2** bei Umgebungstemperatur sowie zur Kühlung bei der Temperatur des siedenden **LH2** am Ende des Abkühlvorganges;
- **Fig. 10**: Flussdiagramm mit dem Ablauf eines weiteren erfindungsgemäßen Verfahrens zur Speicherung von Wasserstoff.

**Fig. 1** zeigt schematisch, d.h. nicht maßstabsgetreu, ein Ausführungsbeispiel für eine erfindungsgemäße Vorrichtung: In einem, mit einer Vakuumpumpe **39** bepumpten Kryobehälter befinden sich ein Kryotank **15** für den supraleitenden magnetischen Energiespeicher **10** sowie ein separater Speichertank **20** für flüssigen Wasserstoff **LH2.** Der Regenerator **30** ist mit separaten Strömungskanälen für vom warmen Ende **35** und vom kalten Ende **36** kommende Fluide ausgeführt, wobei sich zumindest ein Teil im Speichertank **20** unter **GH2**-Bedingungen befindet. Am kalten Ende **36** sind das Joule-Thomson-Entspannungsventil **40** sowie die Zufuhr des **LH2** über eine Steigleitung angebracht. Am warmen Ende **35** befinden sich die Einleitung für komprimierten Wasserstoff zusammen mit dem Hochdruck-Absperrventil **70** sowie die Ausleitung für den Wasserstoff bei niedrigerem Druck und das ebenfalls bei Umgebungstemperatur betriebene Absperrventil **61.** Der Niederdruckbereich ist weiterhin über das Absperrventil **64** mit Steuerelementen zur Druck-Kontrolle im **LH2**-Speichertank **20** verbunden. Als Puffer für Druckschwankungen dient ein Tank **80** für gasförmigen Wasserstoff, der einlassseitig über das Absperrventil **62,** den Verdichter **71** und ein weiteres Absperrventil **63** aus dem kalten Bereich **GH2** aufnimmt und der über das Absperrventil **65,** den Verdichter **72** und das weitere Absperrventil **66** in den kalten Bereich **GH2** abgibt. Die beiden Stränge für **GH2** erlauben es, den Druck im **LH2**-Speicher zu verringern oder zu erhöhen und damit auch die Ausleitung von flüssigem Wasserstoff aus dem **LH2**-Speicher zu steuern. Der supraleitende magnetische Energiespeicher **10** und der **LH2-**Speichertank **20** werden durch die Kühlvorrichtungen **16, 21** (z.B. ein Kleinkühler) thermisch stabilisiert. Stromzuführungen **12** stellen die elektrische Verbindung zur Stromrichter- und Kontroll-Einheit für den Energiespeicher **10** her.

In einer alternativen Ausgestaltung ist anstelle eines Joule-Thomson-Entspannungsventils **40** eine Expansionsmaschine, hier eine Turbine, vorgesehen und an der Ausleitung des **LH2** aus dem Speichertank zusätzlich eine kalte **LH2**-Pumpe angebracht. Nachteilig hieran ist, dass diese Ausgestaltung aufgrund von in einem starken Magnetfeld rotierenden Massen im kalten Bereich Wirbelströme induziert, die zu einem zusätzlichen Wärmeeintrag und damit zu einem Kühlverlust führen.

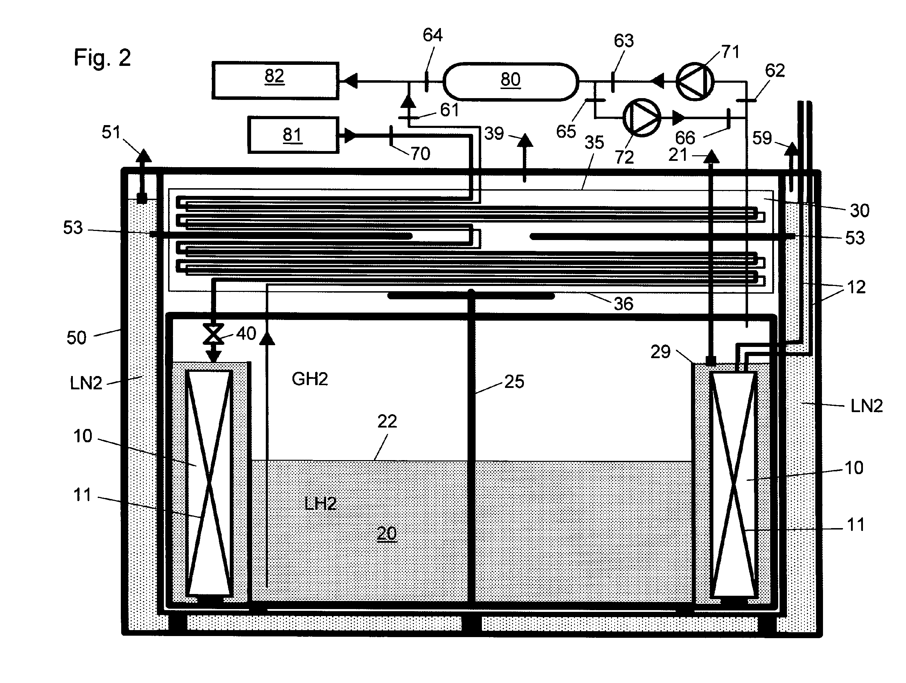

In **Fig. 2** ist schematisch ein vorteilhaftes Ausführungsbeispiel für eine erfindungsgemäße Vorrichtung dargestellt, bei der sich der Regenerator **30** vollständig in einer separaten Kammer unter Vakuumbedingungen befindet, wodurch der Wärmeeintrag in den Regenerator **30** durch freie Konvektion von Gasteilchen verringert wird. Der Regenerator **30** ist hier räumlich oberhalb des Speichertanks **20** für **LH2** angeordnet, und das kalte Ende **36** des Regenerators **30** ist über einen thermischen Kontakt **25,** der hier auch zur mechanischen Halterung des Regenerators **30** dient, mit dem **LH2**-Bad direkt verbunden. Weiterhin ist ein Außentank **50** für flüssigen Stickstoff **LN2** als Strahlungsschild vorgesehen, der über den Zugang **59** mit **LN2** befüllbar ist und zusätzlich über die weitere Kühlvorrichtung **51** (z.B. ein Kleinkühler) thermisch stabilisiert wird. Gleichzeitig wird ein Teil des Regenerators **30** über den thermischen Kontakt **53** zum **LN2**-Bad auf die Temperatur des **LN2** stabilisiert, wobei hier die in der Behälterwand verankerte Halterung gleichzeitig zur räumlichen Fixierung des Regenerators **30** dient.

Der supraleitende magnetische Energiespeicher **10** wird bei der Temperatur des verflüssigten Wasserstoffs **LH2** betrieben. Der Kryotank **15** des Energiespeichers **10** stellt einen nach oben hin offenes Teil des Speichertanks **20** für **LH2** dar, der über das Joule-Thomson-Entspannungsventil **40** mit verflüssigtem Wasserstoff **LH2** versorgt wird und der über einen **LH2**-Überlauf **29** mit dem Hauptteil des Speichertanks **20** verbunden ist. Dieser Aufbau gewährleistet, dass selbst bei einer teilweisen Entleerung des **LH2**-Speichers **20** und der daraus folgenden Absenkung des Flüssigkeitsspiegels **22** der Energiespeicher **10** immer noch vollständig gekühlt wird.

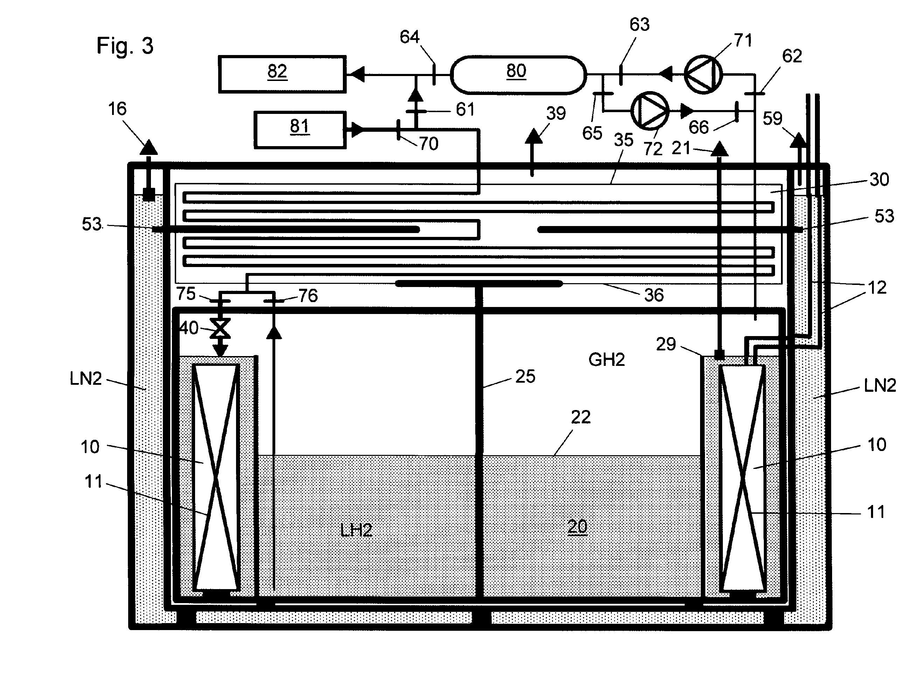

Das Ausführungsbeispiel in **Fig. 3** unterscheidet sich vom Ausführungsbeispiel gemäß **Fig. 2** darin, dass das vom warmen Ende **35** kommende Fluid und das vom kalten Ende **36** kommende Fluid im Gegenstrom einen oder mehrere, z.B. mit Schüttgut befüllte, Strömungskanäle des Regenerators **30** gemeinsam, jedoch zeitlich versetzt durchlaufen. Hierzu sind am kalten Ende des Regenerators **30** zwei Absperrventile vorgesehen, und zwar das Ventil **75,** über das der komprimierte Wasserstoff dem Joule-Thomson-Entspannungsventil **40** zugeführt wird, und das ebenfalls im kalten Bereich betriebene Ventil **76,** über das der flüssige Wasserstoff **LH2** dem Regenerator **30** zugeführt wird. Die beiden Ventile **70** und **61,** die am warmen Ende **35** des Regenerators **30** die Einleitung des komprimierten Wasserstoffs sowie die Ausleitung des Wasserstoffs bei niedrigerem Druck steuern, sind beide mit einem gemeinsamen Strömungskanal verbunden.

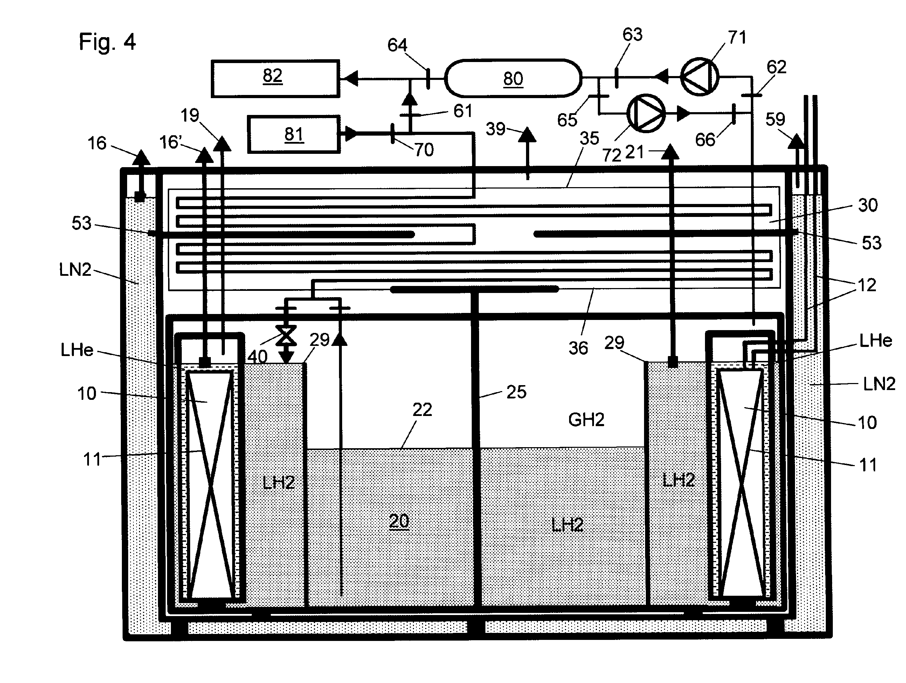

**Fig. 4** zeigt schematisch ein weiteres Ausführungsbeispiel für eine erfindungsgemäße Vorrichtung, bei der im Unterschied zum Ausführungsbeispiel gemäß **Fig. 3** der supraleitende magnetische Energiespeicher **10** bei der Temperatur des flüssigen Heliums **LHe** betrieben wird. Dazu wird der separate Kryotank **15** für den Energiespeicher **10** zwar von einer als Wärmeschild fungierenden Kammer des Speichertanks **20** für **LH2** umschlossen, bleibt aber von dieser getrennt. Über den Zugang **19** ist der Kryotank für den Energiespeicher **10** befüllbar und lässt sich über eine Kühlvorrichtung **16'** für flüssiges Helium (z.B. ein Kleinkühler) zusätzlich thermisch stabilisieren.

In **Fig. 5** ist das Prinzip des erfindungsgemäßen Verfahrens in Form eines Flussdiagramms dargestellt. Gasförmiger Wasserstoff **GH2** wird in einem Kompressor **1** auf einen Druck typischerweise oberhalb des kritischen Drucks komprimiert, durchläuft dann den Regenerator **30,** wird anschließend im Joule-Thomson-Ventil **40** entspannt und verflüssigt, und dann solange in einem **LH2-**Speichertank **20** gelagert, bis er bei Bedarf über den Regenerator **30** wieder aufgewärmt und als gasförmiger Wasserstoff **GH2** bei niedrigerem Druck wieder ausgespeist wird. Das in **Fig. 5** nicht eingezeichnete Magnetfeld des supraleitenden magnetischen Energiespeichers **10** stellt auch ohne Katalysator sicher, dass sich die beiden Spin-Zustände des Wasserstoffs während jedes Prozessschritts weitgehend im thermischen Gleichgewicht befinden.

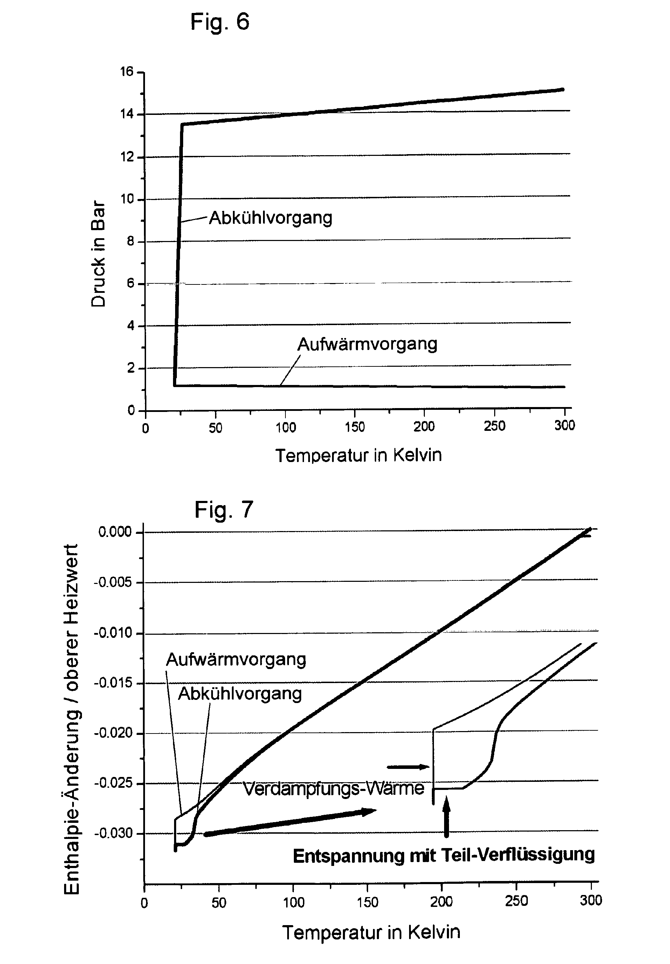

In den **Fig. 6 bis 9** ist das erfindungsgemäße Betriebsverfahren vorgestellt. **Fig. 6** zeigt schematisch ein Beispiel für einen Druckverlauf des Wasserstoffs während des Abkühlvorganges im Regenerator **30,** der Entspannung im Joule-Thomson-Entspannungsventil **40** und dem sich anschließenden Aufwärmvorgang im Regenerator **30.** Hierbei wurde angenommen, dass Wasserstoff bei Umgebungstemperatur bei einem Druck von ca. 1,5 MPa zugeführt und bei einem Druck von ca. 0,1 MPa wieder entnommen wird und dass die Temperatur des verflüssigten Wasserstoffs während der Speicherphase bei ca. 20 bis 23 K gehalten wird. Die Druckverluste, die sich beim Durchströmen des Regenerators **30** ergeben, sind angedeutet.

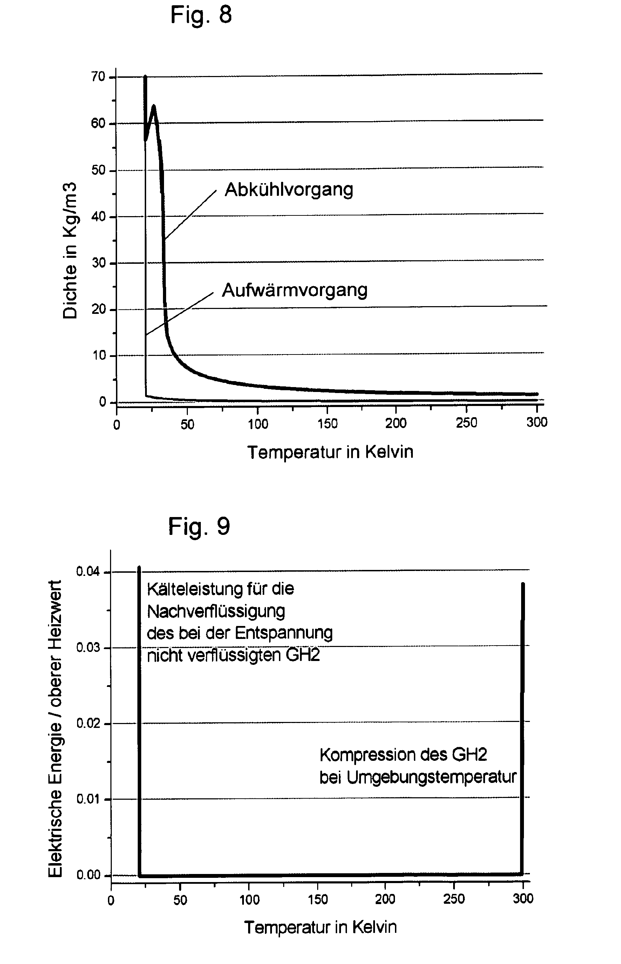

In **Fig. 7** ist der Verlauf der Enthalpie des Wasserstoffs während des Verfahrens gemäß **Fig. 6****,** beginnend bei Umgebungstemperatur, dargestellt. Alle Werte sind auf den oberen Heizwert des Wasserstoffs normiert. Das Magnetfeld des supraleitenden magnetischen Energiespeichers **10** stellt dabei sicher, dass sich während des Verfahrens bei jeder durchlaufenen Temperatur ein weitgehendes Gleichgewicht zwischen Ortho- und Para-Wasserstoff einstellt. Die Änderungen der Enthalpie, die bei den tiefsten Temperaturen auftreten, sind zur Verdeutlichung in **Fig. 7** vergrößert dargestellt: Nach Durchlaufen des Regenerators beim Abkühlvorgang folgt die Joule-Thomson-Entspannung, bei der die Enthalpie weitgehend konstant bleibt (entspricht dem horizontalen Bereich der Abkühlkurve). Dabei wird bereits der größte Teil des Wasserstoffs verflüssigt. Ein kleinerer Teil verbleibt jedoch noch gasförmig und muss dann mit zusätzlicher Kühlleistung nachverflüssigt werden (siehe auch **Fig. 9**). Beim Verdampfen des flüssigen Wasserstoffs wird dem Regenerator die als vertikale Linie erkennbare Verflüssigungs-Enthalpie als Verdampfungswärme entzogen, und der Regenerator dabei vom kalten Bereich abgekühlt. Der verdampfte Wasserstoff wird dann weiter aufgewärmt und entzieht hierbei auch den zur warmen Seite des Regenerators angeordneten Elementen weitere Wäre. Der so abgekühlte Regenerator eignet sich für einen späteren Abkühlvorgang zur Vorkühlung. Wegen des unvollständigen Wärmeübertrags zwischen dem Regenerator **30** und dem Wasserstoff verlässt der Wasserstoff den Regenerator **30** bei einer Temperatur, die unterhalb der Eintrittstemperatur für den Abkühlvorgang liegt. Dieser Effekt ist in **Fig. 7** bei 300 Kelvin angedeutet.

**Fig. 8** zeigt den Verlauf der Dichte des Wasserstoffs während desselben Verfahrens. Unterhalb von ca. 50 K nimmt die Dichte des komprimierten Wasserstoffs beim Abkühlvorgang stark zu, um dann bei der Entspannung wegen der nur unvollständigen Verflüssigung wieder leicht abzunehmen und schließlich mit zusätzlich bereitgestellter Kühlleistung die Dichte des flüssigen Wasserstoffs zu erreichen. Die Verdampfung beim Aufwärmvorgang ist dann wieder mit einer starken Verringerung der Dichte des Wasserstoffs verbunden.

**Fig. 9** deutet die beiden Hauptanteile der elektrischen Energie an, die erforderlich sind, um das in den **Fig. 6 bis 8** dargestellte Verfahren zur Speicherung von Wasserstoff auszuführen. Dies ist zum einen die elektrische Energie, die zur Kompression des **GH2** bei Umgebungstemperatur benötigt wird. Den zweiten Hauptanteil an elektrischer Energie stellt die Kälteleistung dar, die bei der Temperatur des siedenden **LH2** am Ende des Abkühlvorgangs zur Nachverflüssigung des bei der Entspannung nicht verflüssigten Wasserstoffs benötigt wird. Weitere Anteile an elektrischer Energie, die zur thermischen Stabilisierung der kryogenen Einheit oder zu deren Steuerung erforderlich sind, wurden nicht dargestellt. Summiert man die beiden Hauptanteile auf, so ergibt sich ein elektrischer Energiebedarf von ca. 8 % des oberen Heizwertes von Wasserstoff, der zum einen deutlich niedriger liegt als der Anteil in Höhe von ca. 30%, der für die Verflüssigung in größeren Anlagen benötigt wird, und der zum anderen mit dem Wert in Höhe von ca. 10%, der typischerweise für die Komprimierung auf 15 auf 20 MPa benötigt wird, vergleichbar ist.

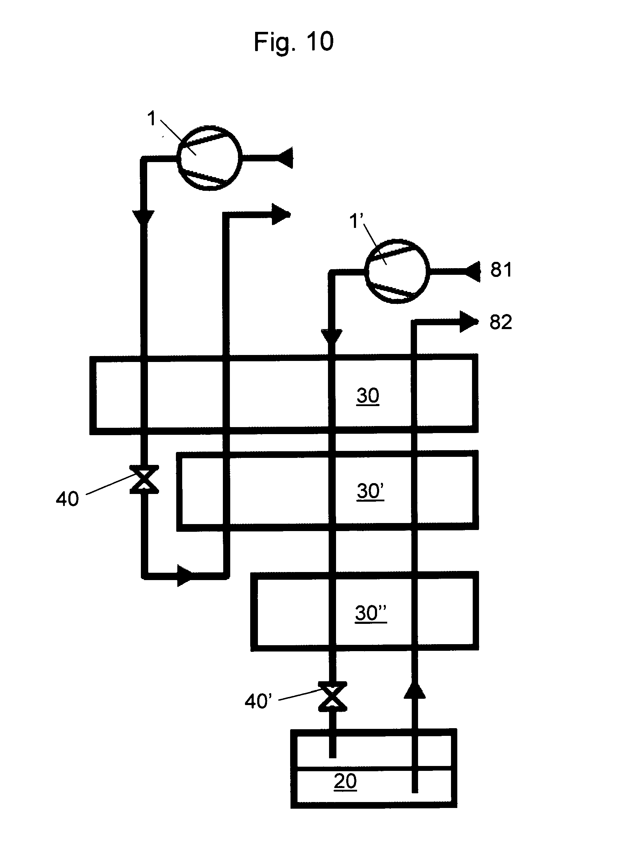

**Fig. 10** zeigt ein weiteres Ausführungsbeispiel für das Verfahren zur Wasserstoffspeicherung in Form eines Flussdiagramms. Gegenüber **Fig. 5** wurde das Verfahren durch eine Vorkühlung mit Sauerstoff erweitert. Gasförmiger Sauerstoff wird in einem weiteren Kompressor verdichtet oder kann alternativ in einem Hochdruck-Elektrolyseur bereits gemeinsam mit Wasserstoff auf hohem Druck erzeugt werden, durchläuft dann ebenfalls den Regenerator, wird anschließend in einem weiteren Joule-Thomson-Ventil entspannt und dabei abgekühlt oder verflüssigt, und trägt so zur thermischen Stabilisierung des Regenerators bei, der vom Wasserstoff durchströmt wird.

Besonders vorteilhafte Ausführungen ergeben sich bei der Wahl folgender Parameter:

Der supraleitende magnetische Energiespeicher **10** wird lokal mit Magnetfeldern von 1-30 T, bevorzugt von 4-11 T, betrieben, während der Betriebsstrom im Bereich von 30 % bis 100 % geändert wird, wobei die Magnetfeldstärke an allen Orten des mindestens einen Regenerators, des (Joule-Thomson-)Entspannungsventils und des Speichertanks für den verflüssigten Wasserstoff eine untere Grenze bevorzugt von 0,1 T, besonders bevorzugt von 1 T nicht unterschreitet.

Supraleitende Materialien, die sich für die Erzeugung von Magnetfeldern bereits bei der Temperatur des verflüssigten Wasserstoffs einsetzen lassen sind insbesondere BiSrCaCuO, YBaCuO oder MgB2. Eine unmittelbare Synergie zwischen der Speicherung von **LH2** und dem Betrieb des supraleitenden magnetischen Energiespeichers **10** ergibt sich daher, wenn gemäß **Fig. 2** **und** **3** der Energiespeicher **10** bei der Temperatur des verflüssigten Wasserstoffs betrieben wird, und der Kryotank des SMES ein Teil des Speichertanks **20** für **LH2** ist.

Gemäß **Fig. 4** wird der Energiespeicher **10** in einer alternativen Ausführung mit klassischen Supraleitern, bevorzugt auf Basis von NbTi, bei der Temperatur des flüssigen Heliums **LHe** betrieben. Hierzu wird ein separater **LHe**-Kryotank für den Energiespeicher **10** eingesetzt, der zur besseren Wärmeabschirmung zumindest teilweise von einer Kammer des Speichers für **LH2** umschlossen ist, die dann wieder über eine **LH2**-Überlaufleitung mit dem anderen Teil des Speichertanks **20** verbunden ist.

Die Speichermedien des mindestens einen Regenerators **30** besitzen vorteilhaft eine magnetische Suszeptibilität mit einem Absolutwert unterhalb von 10⁻⁵, einer elektrischen Leitfähigkeit geringer als 10⁻⁸ S/m und einer volumenbezogenen spezifischen Wärmekapazität oberhalb von 20 MJ/M³·K. Diese Eigenschaften weisen insbesondere Teflon oder andere Materialien auf der Basis von festen Kohlenwasserstoffen auf.

Der über das warme Ende des mindestens einen Regenerators **30** zugeführte komprimierte Wasserstoff wird vorzugsweise auf einen Druck oberhalb von 1,3 MPa verdichtet und nach dem Durchlaufen des mindestens einen Regenerators **30** im (Joule-Thomson-)Entspannungsventil **40** auf einen Entspannungsdruck unterhalb von 0,1 MPa entspannt. Da die Druckniveaus vom SollDruck des auszuspeisenden Wasserstoffs abhängen, wird über die Druck-Kontrolle der Druck im Speichertank **20** so eingestellt, dass er während der Speicherphase den Entspannungsdruck um höchstens 0,2 MPa übersteigt. Ebenfalls über die Druck-Kontrolle sowie die am Speichertank **20** angebrachte Kühlvorrichtung **21** wird die Temperatur des verflüssigten Wasserstoffs so eingestellt, dass sie im Bereich 18-35 K gehalten wird. Beim Verlassen des mindestens einen Regenerators **30** nach der Speicherphase weist der Wasserstoff eine Temperatur auf, die höchstens 30 K unterhalb der Umgebungstemperatur liegt.

### Bezugszeichenliste

- **GH2**: gasförmiger Wasserstoff
- **LH2**: verflüssigter Wasserstoff
- **LN2**: verflüssigter Stickstoff
- **LHe**: verflüssigtes Helium

- **1**: Kompressor zur Verdichtung auf Einspeise-Druck
- **10**: supraleitender magnetischer Energiespeicher
- **11**: Magnetspule des Energiespeichers **10**
- **12**: Stromzuführungen zur Stromrichter- und Kontroll-Einheit für den Energiespeicher **10**
- **15**: Kryotank für den Energiespeicher **10**
- **16**: Kühlvorrichtung für den **SMES**
- **19**: Zufuhr und Druck-Kontrolle für **LHe**

- **20**: Speichertank für **LN2**
- **21**: Kühlvorrichtung für das **LH2**-Bad
- **22**: Flüssigkeitsspiegel im Speichertank **20**
- **23**: Thermischer Kontakt zum **LN2**-Bad
- **25**: Thermischer Kontakt zum **LH2**-Bad
- **29**: Überlauf für **LH2**

- **30**: Regenerator
- **35, 36**: warmes Ende bzw. kaltes Ende des Regenerators
- **39**: Anschluss zur Vakuum-Pumpe

- **40**: Joule-Thomson-Entspannungsventil

- **50**: Außentank für **LN2**
- **51**: Kühlvorrichtung für den Außentank **50**
- **59**: Zufuhr und Druck-Kontrolle für **LN2**

- **61,62,** ...: Absperrventile im warmen Bereich für Schaltvorgänge bei niedrigem Druck
- **70**: Absperrventil für den Hochdruckbereich bei Umgebungstemperatur
- **71, 72**: **GH2**-Verdichter bei niedrigem Druck im warmen Bereich zur Druck-Kontrolle im **LH2**-Kryo-Speicher
- **75**: Absperrventil für den Hochdruckbereich im kalten Bereich
- **76**: Absperrventil für den Zufluss von **LH2** im kalten Bereich

- **80**: Speichertank für **GH2** bei Umgebungstemperatur
- **81**: Komprimierter Wasserstoff
- **82**: Wasserstoff bei niedrigem Druck

## Patentansprüche

1. Vorrichtung zur Speicherung von Wasserstoff mit einer Einleitung für komprimierten Wasserstoff sowie mit einer Ausleitung für Wasserstoff bei niedrigerem Druck dafür und zur Speicherung von magnetischer Energie, aufweisend einen supraleitenden magnetischen Energiespeicher (10), der aus mindestens einer Magnetspule (11) aufgebaut ist, dem über Stromzuführungen (12) zur mindestens einen Magnetspule (11) elektrische Energie zuführbar oder entnehmbar ist, der sich in einem mit einer Kühlvorrichtung (16) versehenen Kryotank (15) befindet und auf Betriebstemperatur gehalten wird, **dadurch gekennzeichnet, dass** sich im Feldbereich der mindestens einen Magnetspule (11) ein mit einer weiteren Kühlvorrichtung (21)versehener Speichertank (20) für verflüssigten Wasserstoff, mindestens ein Regenerator (30), der mindestens ein Wärme aufnehmendes und abgebendes Speichermedium sowie eine warme Seite (35) und eine kalte Seite (36) aufweist und in den von der warmen Seite (35) der komprimierte Wasserstoff und von der kalten Seite (36) flüssiger Wasserstoff aus dem Speichertank (20) für verflüssigten Wasserstoff zuführbar ist, und ein Entspannungsventil (40) befinden, das mit der kalten Seite (36) des Regenerators (30) derart verbunden ist, dass der komprimierte Wasserstoff nach dem Durchlauf durch den Regenerator (30) in das Entspannungsventil (40) einspeisbar und durch Entspannung als zumindest teilweise verflüssigter Wasserstoff dem Speichertank (20) für verflüssigten Wasserstoff zuführbar ist.

2. Vorrichtung nach Anspruch 1, **dadurch gekennzeichnet, dass** sich der mindestens eine Regenerator (30) räumlich oberhalb des Speichertanks (20) für verflüssigten Wasserstoff befindet, wobei das kalte Ende (36) des mindestens einen Regenerators (30) der Flüssigkeitsoberfläche (22) des flüssigen Wasserstoffs zugewandt ist.

3. Vorrichtung nach Anspruch 2, **dadurch gekennzeichnet, dass** zwischen dem Speichertank (20) für verflüssigten Wasserstoff und der kalten Seite (36) des Regenerators (30) ein thermischer Kontakt (25) besteht.

4. Vorrichtung nach einem der Ansprüche 1 bis 3, **dadurch gekennzeichnet, dass** zumindest der Kryotank (15) für den supraleitenden magnetischen Energiespeicher (10), der Speichertank (20) für verflüssigten Wasserstoff und der mindestens eine Regenerator (30) zumindest teilweise von einem mit einer Kühleinrichtung (51) verbundenen Bad aus flüssigem Stickstoff oder Sauerstoff umgeben sind, wobei zwischen der Kühleinrichtung (51) und dem mindestens einen Regenerator (30) ein weiterer thermischer Kontakt (53) besteht.

5. Verfahren zum Betrieb einer Vorrichtung zur Speicherung von Wasserstoff und von magnetischer Energie nach einem der Ansprüche 1 bis 4, mit den Schritten
a) Einstellen des Betriebsstroms für einen supraleitenden magnetischen Energiespeicher (10), der aus mindestens einer Magnetspule (11) aufgebaut ist, über damit verbundene Stromzuführungen (12), wodurch der mindestens einen Magnetspule (11) elektrische Energie derart zugeführt oder entnommen wird, dass sich in der mindestens einen Magnetspule (11) ein Magnetfeld ändert, dessen Feldstärke im Bereich mindestens eines Regenerators (30), eines Entspannungsventils (40) und eines Speichertanks (20) für verflüssigten Wasserstoff eine untere Grenze nicht unterschreitet, die für die Ortho-Para-Umwandlung und die Para-Ortho-Rückumwandlung notwendig ist.
b) Zuführen von komprimiertem Wasserstoff bei Umgebungstemperatur über das warme Ende (35) in den mindestens einen Regenerator (30), worin der Wasserstoff durch Wärmeabgabe an mindestens ein sich darin befindliches Speichermedium abgekühlt wird, und Entspannen des Wasserstoffs im Entspannungsventil (40), wodurch sich der Wasserstoff überwiegend verflüssigt,
c) Auffangen und Lagern des verflüssigten Wasserstoffs als LH2-Bad im Speichertank (20) für verflüssigten Wasserstoff,
d) Zuführen von Wasserstoff in flüssiger Form über das kalte Ende (36) des mindestens einen Regenerators (30), worin der Wasserstoff durch Wärmeaufnahme aus dem mindestens einen Speichermedium aufgewärmt wird und dadurch in die gasförmige Phase übergeht, und Ausleiten des gasförmigem Wasserstoffs über das warme Ende (35) des mindestens einen Regenerators (30),
wobei während der Schritte b) und d) das Magnetfeld der mindestens einen Magnetspule (11) des supraleitenden magnetischen Energiespeichers (10) die Ortho-Para-Umwandlung oder die Para-Ortho-Rückumwandlung des Wasserstoffs so unterstützt, dass sich bei jeder Temperatur weitgehend ein thermisches Gleichgewicht einstellt.

6. Verfahren nach Anspruch 5, wobei das kalte Ende (36) des mindestens einen Regenerators (30) auf das Temperaturniveau des LH2-Bades im Speichertank (20) für verflüssigten Wasserstoff thermisch stabilisiert wird.

7. Verfahren nach Anspruch 5 oder 6, wobei zumindest Teile des mindestens einen Regenerators (30) auf das Temperaturniveau eines Bades aus flüssigem Stickstoff oder Sauerstoff, das zumindest den Speichertank (20) für verflüssigten Wasserstoff und den mindestens einen Regenerator (30) zumindest teilweise umgibt, thermisch stabilisiert werden.

8. Verfahren nach einem der Ansprüche 5 bis 7, wobei der Wasserstoff zusammen mit dem Sauerstoff in einem Hochdruck-Elektrolyseur erzeugt wird, und der Sauerstoff zunächst durch Wärmeübertragung abgekühlt, dann druckentspannt und dabei weiter abgekühlt und/oder teilverflüssigt wird, wodurch er zur thermischen Stabilisierung zumindest eines Teils des mindestens einen Regenerators (30) beiträgt.

## Claims

1. Apparatus for storing hydrogen with an inlet for compressed hydrogen and an outlet for hydrogen at lower pressure therefor, and for storing magnetic energy, comprising a superconducting magnetic energy store (10), which is composed of at least one magnetic coil (11), to which or from which electrical energy can be supplied or removed by means of power supply lines (12) to at least one magnetic coil (11), which is located in a cryotank (15) fitted with a cooling device (16) and is held at operating temperature,
**characterised in that**
in the field area of the at least one magnetic coil (11), a storage tank (20) for liquefied hydrogen fitted with a further cooling device (21), at least one regenerator (30) and a depressurisation valve (40) are located, wherein said regenerator has at least one heat-absorbing and heat-releasing storage medium and one hot side (35) and one cold side (36) and into which from the hot side (35) the compressed hydrogen and from the cold side (36) liquid hydrogen can be supplied from the storage tank (20) for liquefied hydrogen, wherein said valve is connected to the cold side (36) of the regenerator (30) in such a manner that the compressed hydrogen can, after passing through the regenerator (30), be fed into the depressurisation valve (40) and can be supplied to the storage tank (20) for liquefied hydrogen by depressurisation as at least partially liquefied hydrogen.

2. Apparatus according to claim 1, **characterised in that** the at least one regenerator (30) is physically located above the storage tank (20) for liquefied hydrogen, wherein the cold end (36) of the at least one regenerator (30) is facing the liquid surface (22) of the liquid hydrogen.

3. Apparatus according to claim 2, **characterised in that** there is a thermal contact (25) between the storage tank (20) for liquefied hydrogen and the cold side (36) of the regenerator (30).

4. Apparatus according to any one of claims 1 to 3, **characterised in that** at least the cryotank (15) for the superconducting magnetic energy store (10), the storage tank (20) for liquefied hydrogen and the at least one regenerator (30) are surrounded at least partially by a bath of liquid nitrogen or oxygen connected to a cooling device (51), wherein there is a further thermal contact (53) between the cooling device (51) and the at least one regenerator (30).

5. Method for operating an apparatus for storing hydrogen and magnetic energy according to any one of claims 1 to 4, with the following steps:
a) Setting of the operating current for a superconducting magnetic energy store (10), which is composed of at least one magnetic coil (11), by means of power supply lines (12) connected to it, wherein electrical energy is supplied to or taken from the at least one magnetic coil (11) in such a manner that, in the at least one magnetic coil (11), a magnetic field changes, the field strength of which in the area of at least one regenerator (30), one depressurisation valve (40) and one storage tank (20) for liquefied hydrogen, does not fall below a lower limit which is necessary for the ortho para conversion and the para ortho reconversion,
b) Supply of compressed hydrogen at ambient temperature by means of the hot end (35) into the at least one regenerator (30), wherein the hydrogen is cooled by the heat output to at least one storage medium located in it, and depressurisation of the hydrogen in the depressurisation valve (40), wherein the hydrogen is largely liquefied,
c) Capture and storage of the liquefied hydrogen as an LH2 bath in the storage tank (20) for liquefied hydrogen,
d) Supply of hydrogen in liquid form by means of the cold end (35) of the at least one regenerator (30), wherein the hydrogen is heated by heat absorption from the at least one storage medium and thereby transitions into the gaseous phase, and discharge of the gaseous hydrogen by means of the hot end (35) of the at least one regenerator (30),
wherein during the stages b) and d), the magnetic field of the at least one magnetic coil (11) of the superconducting magnetic energy store (10) supports the ortho para conversion or the para ortho reconversion of the hydrogen in such a way that at any temperature a thermal equilibrium largely occurs.

6. Method according to claim 5, wherein the cold end (36) of the at least one regenerator (30) is thermally stabilised at the temperature level of the LH2 bath in the storage tank (20) for liquefied hydrogen.

7. Method according to claim 5 or 6, wherein at least parts of the at least one regenerator (30) are thermally stabilised at the temperature level of a bath of liquid nitrogen or oxygen, which surrounds at least partially at least the storage tank (20) for liquefied hydrogen and the at least one regenerator (30).

8. Method according to any one of claims 5 to 7, wherein the hydrogen is generated together with the oxygen in a high-pressure electrolyser, and the oxygen is initially cooled by heat transfer, then depressurised and thereby cooled further and / or partially liquefied, wherein it contributes to the thermal stabilisation of at least part of the at least one regenerator (30).

## Revendications

1. Dispositif de stockage d'hydrogène comportant une entrée d'hydrogène comprimé et une sortie d'hydrogène à plus faible pression,
et de stockage d'énergie magnétique, comprenant un accumulateur d'énergie magnétique supraconducteur (10) qui est constitué d'au moins une bobine magnétique (11) à laquelle peut être fournie ou prélevée de l'énergie électrique par des conduites d'alimentation en courant (12), qui est située dans un réservoir cryogénique (15) équipé d'un dispositif de réfrigération (16) et est maintenue à la température de fonctionnement,
**caractérisé en ce que**
sont positionnés dans la zone du champ de la bobine magnétique (11), un réservoir de stockage (20) pour l'hydrogène liquéfié équipé d'un autre dispositif de réfrigération (21), au moins un régénérateur (30) qui comporte au moins un agent accumulateur absorbant et dissipant la chaleur ainsi qu'un côté chaud (35) et un côté froid (36) et, dans lequel, on peut introduire par le côté chaud (35) l'hydrogène comprimé et par le côté froid (36) de l'hydrogène liquéfié provenant du réservoir accumulateur (20) d'hydrogène liquéfié, ainsi qu'une soupape de détente (40) qui est reliée au côté froid (36) du régénérateur (30) de sorte que l'hydrogène comprimé puisse, après être passé dans le régénérateur (30) être fourni dans la soupape de détente (40), et par détente, puisse être fourni en tant qu'hydrogène au moins partiellement liquéfié au réservoir accumulateur (20) d'hydrogène liquéfié.

2. Dispositif conforme à la revendication 1,
**caractérisé en ce que**
le régénérateur (30) est positionné dans l'espace au-dessus du réservoir accumulateur (20) d'hydrogène liquéfié, l'extrémité froide (36) du régénérateur (30) étant tournée vers la surface de liquide (22) de l'hydrogène liquéfié.

3. Dispositif conforme à la revendication 2,
**caractérisé en ce qu'**
entre le réservoir accumulateur (20) d'hydrogène liquéfié et le côté froid (36) du régénérateur (30), il y a un contact thermique (25).

4. Dispositif conforme à l'une des revendications 1 à 3,
**caractérisé en ce qu'**
au moins le réservoir cryogénique (15) pour l'accumulateur d'énergie magnétique supraconducteur (10), le réservoir accumulateur (20) d'hydrogène liquéfié et le régénérateur (30) sont au moins partiellement entourés par un bain d'azote ou d'oxygène liquide relié à un dispositif de réfrigération (51), un autre contact thermique (53) étant monté entre le dispositif de réfrigération (51) et le régénérateur (30).

5. Procédé de mise en fonctionnement d'un dispositif de stockage d'hydrogène et d'énergie magnétique conforme à l'une des revendications 1 à 4 comprenant les étapes consistant à :
a) régler le courant de fonctionnement d'un accumulateur d'énergie magnétique supraconducteur (10) qui est constitué d'au moins une bobine magnétique (11), par des conduites d'alimentation en courant (12) reliées à celui-ci, pour fournir ou soutirer de l'énergie électrique à la bobine magnétique (11) de façon à modifier, dans cette bobine magnétique (11) un champ magnétique dont l'intensité ne devient pas inférieure dans la zone d'au moins un régénérateur (30), d'une soupape de détente (40) et d'un réservoir accumulateur (20) d'hydrogène liquéfié une limite inférieure qui est nécessaire pour la transformation ortho-para et la transformation inverse para-ortho,
b) fournir de l'hydrogène comprimé à la température ambiante par l'extrémité chaude (35) dans le régénérateur (30) dans lequel l'hydrogène est refroidi par dissipation de chaleur sur au moins un agent accumulateur renfermé dans celui-ci, et détendre l'hydrogène dans la soupape de détente (40), de sorte que, l'hydrogène se liquéfie largement,
c) capturer et dépôt de l'hydrogène liquéfié sous la forme d'un bain LH2 dans le réservoir accumulateur (20) d'hydrogène liquéfié,
d) fournir l'hydrogène sous forme liquide par l'extrémité froide (36) du régénérateur (30), dans lequel l'hydrogène est réchauffé par prélèvement de chaleur provenant de l'agent accumulateur et ainsi transféré sous forme gazeuse et évacue l'hydrogène gazeux par l'extrémité chaude (35) du régénérateur (30),
pendant les étapes b) et d), le champ magnétique de la bobine magnétique (11) de l'accumulateur d'énergie magnétique supraconducteur (10) assistant la transformation ortho-para ou la transformation inverse para-ortho de l'hydrogène de sorte qu'il établisse largement pour chaque température un équilibre thermique.

6. Procédé conforme à la revendication 5, selon lequel l'extrémité froide (36) du régénérateur (30) est stabilisée thermiquement au niveau de température du bain LH2 dans le réservoir accumulateur (20) d'hydrogène liquéfié.

7. Procédé conforme à la revendication 5 ou 6, selon lequel au moins des parties du régénérateur (30) sont stabilisées thermiquement au niveau de température d'un bain d'azote ou d'oxygène liquide qui entoure au moins partiellement le réservoir accumulateur (20) d'hydrogène liquéfié et le régénérateur (30).

8. Procédé conforme à l'une des revendications 5 à 7, selon lequel l'hydrogène est produit avec l'oxygène dans une cellule d'électrolyse haute pression, et l'oxygène est tout d'abord refroidi par transfert de chaleur puis détendu en pression et, ensuite à nouveau refroidi et/ou partiellement liquéfié, de sorte qu'il participe à la stabilisation thermique d'au moins une partie du régénérateur (30).
